(19) Europäisches Patentamt

European Patent Office

Office européen des brevets

(11) **EP 1 376 925 A2**

(12) **EUROPEAN PATENT APPLICATION**

(43) Date of publication:
    **02.01.2004 Bulletin 2004/01**

(51) Int Cl.⁷: **H04L 9/32**

(21) Application number: **03010200.8**

(22) Date of filing: **06.05.2003**

| (84) | Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) | Inventor: **Benaloh, Josh D.**<br>**Redmond, Washington 98052 (US)** |
|---|---|---|---|
| (30) | Priority: **18.06.2002 US 175198** | (74) | Representative: **Grünecker, Kinkeldey,**<br>**Stockmair & Schwanhäusser Anwaltssozietät**<br>**Maximilianstrasse 58**<br>**80538 München (DE)** |
| (71) | Applicant: **MICROSOFT CORPORATION**<br>**Redmond, Washington 98052-6399 (US)** | | |

(54) **Selectively disclosable digital certificates**

(57)     An authentication mechanism uses a selectively disclosable digital certificate that gives the user strong control over what authenticated data is released to whom without allowing even a third-party certifying authority to determine precisely what data is being disclosed. In one implementation, the selectively disclosable digital certificate has multiple data fields to hold associated data items pertaining to the user. The certifying authority obfuscates the data items prior to storage in the fields. The data items are obfuscated in such a manner that data items in corresponding fields can be selectively exposed without exposing other non-selected data items in other fields of the certificate. When the user enters a transaction that involves authentication, the user submits the digital certificate together with the capabilities to expose selected data items in selected fields. The transacting party uses the capabilities to recover selected data items, while other data items in the certificate remain obfuscated.

Fig. 1

## Description

### TECHNICAL FIELD

This invention relates to digital certificates, such as those used in cryptographic infrastructures for authentication purposes.

### BACKGROUND

Digital certificates have been available to support remote transactions for nearly a quarter of a century. Digital certificates allow computer users to authenticate themselves to each other, even though they have never met in person. Such authentication protocols are rooted in the understanding that each user trusts certificates issued by a trusted third-party certifying authority (e.g., financial institution, security entity such as Verisign Corporation, etc.).

To obtain a digital certificate, a computer user submits information identifying himself or herself to the certifying authority. The certifying authority generates and digitally signs a digital certificate vouching for the authenticity of the bearer of the certificate who can be identified by the enclosed information. The computer user may then submit that certificate to other sites during common authentication protocols.

A digital certificate typically contains several fields of personal data that are used to identify the requester. For example, the fields might contain basic information such as the certificate owner's name, the owner's public key from a public/private key pair, and the issue and expiration dates of the certification. Other less common fields may include more sensitive information such as an email address, physical address, telephone number, gender, driver's license, name of employer, credit report for the bearer, information on the bearer's income and assets, and various data on purchase histories and club memberships.

While it is a technically simple matter for a certifying authority to include essentially any personal data in a digital certificate, the inclusion of excessive personal data may limit the utility of a certificate since the bearer may not wish to disclose all available data at all times. Recent interest in privacy and anonymity demands a more flexible mechanism of providing third-party authentication.

One possible solution is to simply obtain a fresh certificate containing precisely the data to be disclosed when needed. However, this approach has two undesirable properties: (1) it may be inconvenient and costly for the user to obtain new certificates on an "as needed" basis, and (2) this approach potentially discloses to the certifying authority certain details about what combinations of data are being released and when.

Accordingly, there is a need for a more flexible mechanism of providing third-party authentication in a manner that ensures greater privacy and anonymity.

## SUMMARY

An authentication mechanism uses a selectively disclosable digital certificate that gives the user strong control over what authenticated data is released to whom, without allowing even the third-party certifying authority to determine precisely what data is being disclosed. In the described implementation, the selectively disclosable digital certificate is constructed with multiple data fields to hold associated data items pertaining to the user (e.g., name, age, social security number, etc.). But instead of storing the data items themselves in the data fields, the certifying authority obfuscates the data items prior to storage. The data items are obfuscated in such a manner that data items in corresponding fields can be selectively exposed without exposing other non-selected data items in other fields of the certificate.

In one implementation, the obfuscation is accomplished by encryption techniques. Random keys are generated for each data field and then used to encrypt the data items to be placed in the corresponding data fields. In another implementation, the obfuscation is performed using cryptographic hashing techniques. Keyed hash digests are computed from the data items and random keys associated with the fields. The keyed hash digests are then placed in the data fields. After the certificate is created, the certifying authority returns the certificate and capabilities to expose individual fields (e.g., keys) are returned to the user.

When the user enters a transaction that involves authentication, the user submits the digital certificate together with the capabilities to expose selected data items in selected fields. For instance, the user submits the keys associated with selected fields so that the data items in the selected fields can be decrypted or used to evaluate keyed hash digests. The transacting party uses the capabilities to recover selected data items, while other data items in the certificate remain obfuscated.

### BRIEF DESCRIPTION OF THE DRAWINGS

Fig. 1 illustrates a computer network during an issuance phase of an authentication process in which a user requests a digital certificate and a certifying authority issues a selectively disclosable digital certificate.

Fig. 2 illustrates a computer network during a transaction phase of an authentication process in which the user submits the selectively disclosable digital certificate and a transacting party accesses and uses selected items in the digital certificate to authenticate the user.

Fig. 3 depicts one exemplary implementation of a selectively disclosable digital certificate, where data items are encrypted and stored in corresponding fields of the certificate.

Fig. 4 depicts another exemplary implementation of a selectively disclosable digital certificate, where keyed hash values are computed from data items and random keys and stored in corresponding fields of the certificate.

Fig. 5 is a flow diagram showing a process for issuing the selectively disclosable digital certificate.

Fig. 6 is a flow diagram showing a process for using the selectively disclosable digital certificate in a transaction.

Fig. 7 illustrates a computer network during the issuance phase similar to Fig. 1, but depicts an additional entity that independently verifies data fields in the digital certificate issued by the certifying authority.

Fig. 8 is a block diagram of an exemplary general-purpose computer that may be used to implement various computers used in the computer networks of Figs. 1,2, and 7.

## DETAILED DESCRIPTION

The following discussion assumes that the reader is familiar with cryptography. For a basic introduction of cryptography, the reader is directed to a text written by Bruce Schneier and entitled "Applied Cryptography: Protocols, Algorithms, and Source Code in C," published by John Wiley & Sons with copyright 1994 (with a second edition in 1996) or the text written by Alfred J. Menezes, Paul C. van Oorschot, and Scott A. Vanstone and entitled "Handbook of Applied Cryptography," published by CRC Press with copyright 1997, which are hereby incorporated by reference.

## Exemplary Authentication Environment

Third-party authentication can be described as occurring in two phases. In the first phase, a user or requestor obtains a digital certificate from a third-party authenticator, which is also referred to as a certifying authority. In the second phase, the user submits the digital certificate to transacting party for purposes of authenticating oneself to the transacting party. These phases are described separately below.

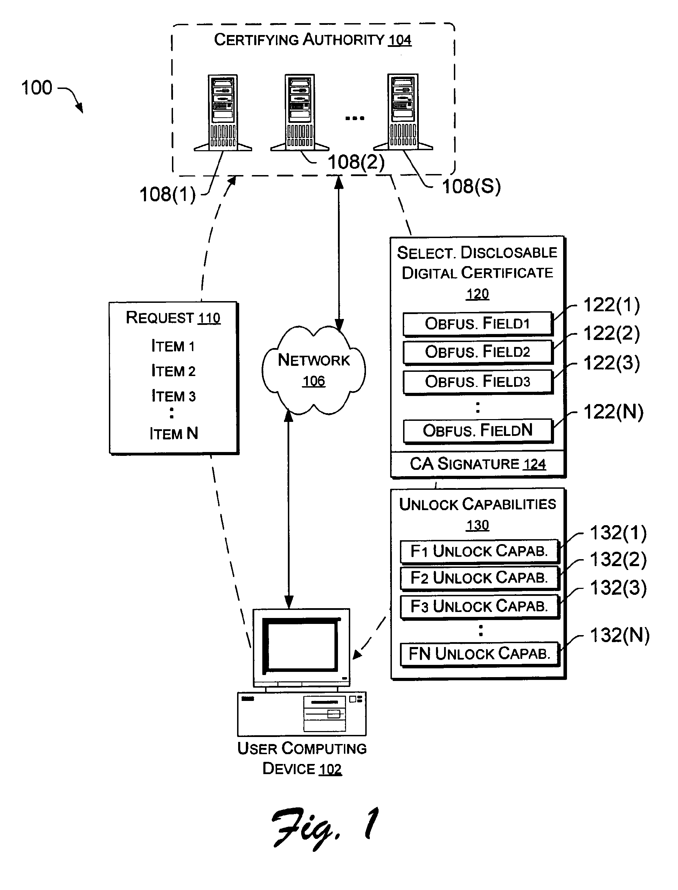

Fig. 1 shows a simple computer network system 100 during the first phase of the authentication process when a user computing device 102 requests a digital certificate from a certifying authority 104 and the certifying authority generates and returns a selectively disclosable digital certificate. The user computing device 102 communicates with the certifying authority 104 via a network 106, which can be implemented in a variety of ways. For instance, the network 106 might be implemented as a LAN (local area network) and/or a WAN (wide area network), such as the Internet, using a wide variety of technologies, including wire-based technologies (e.g., wire, cable, fiber optic, etc.) and/or wireless technologies (e.g., satellite, radio, microwave, etc.).

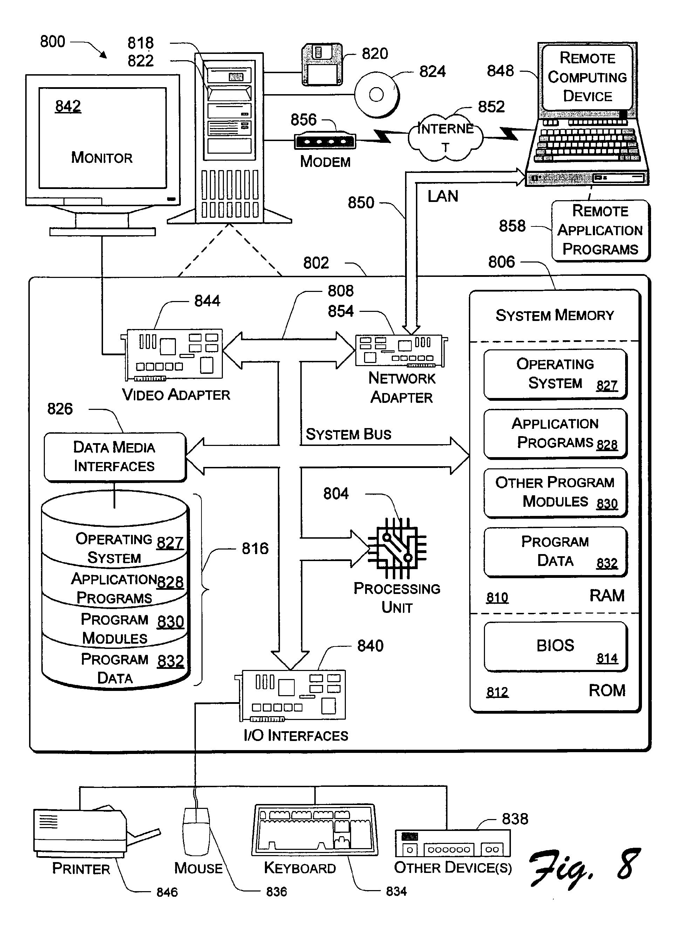

The user computing device 102 may be implemented in many ways including, for example, as a general-purpose desktop computer (as shown), a portable computer, a handheld computer, a cellular phone, a portable digital assistant, an email client, a set-top box, electronic gaming device, consumer electronics device, or any other type of device that is capable of digital communication to request and receive digital certificates. The certifying authority or authenticator 104 is illustrated as having one or more computer servers 108(1), 108(2), ... 108(S) configured to receive requests from multiple user computing devices and return digital certificates. One example of a computing device that may be used to implement the user computing device 102 and/or the server 108 is described below in more detail with reference to Fig. 8.

In Fig. 1, the user computing device 102 submits a request 110 for a digital certificate. The request 110 contains personal information pertaining to the user who is requesting the certificate. Essentially any information can be included in the request. Such information may be sensitive and/or non-sensitive, and can vary widely depending upon the purpose or intended use of the digital certificate. Examples of possible personal data items that might be provided in the request 110 include information such as the requestor's name, email address, physical address, telephone number, gender, driver's license, social security number, name of employer, credit report, requestor's income and assets, purchase histories, club memberships, affiliations, and so on.

The certifying authority 104 receives the request 110 and generates a selectively disclosable digital certificate 120 for return to the user computing device 102. The selectively disclosable digital certificate 120 contains and authenticates the personal information submitted by the user, but formats the certificate in such a manner that enables the user to control what authenticated data is released to whom without allowing even the certifying authority to determine precisely what data is being disclosed.

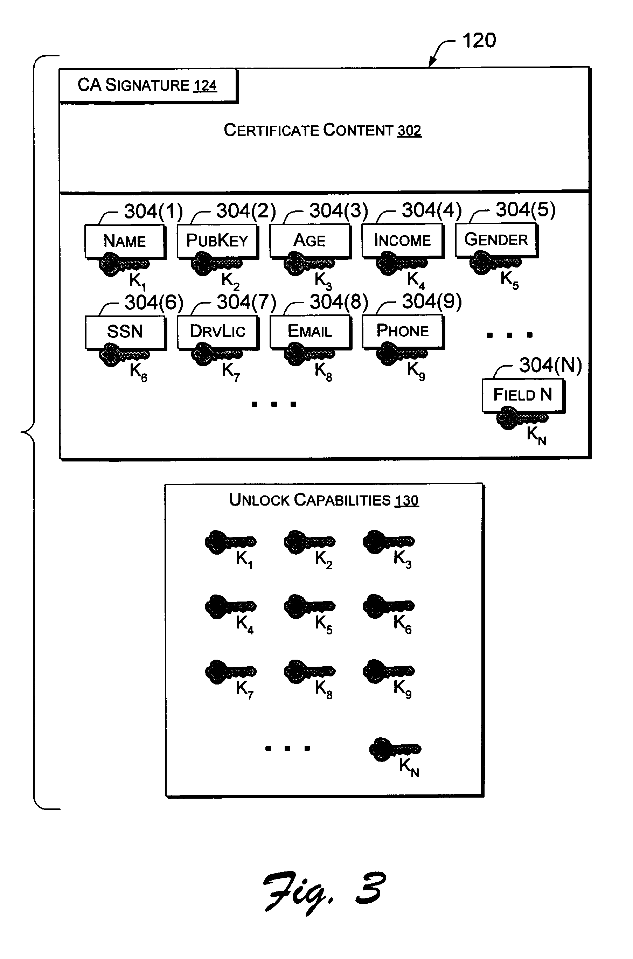

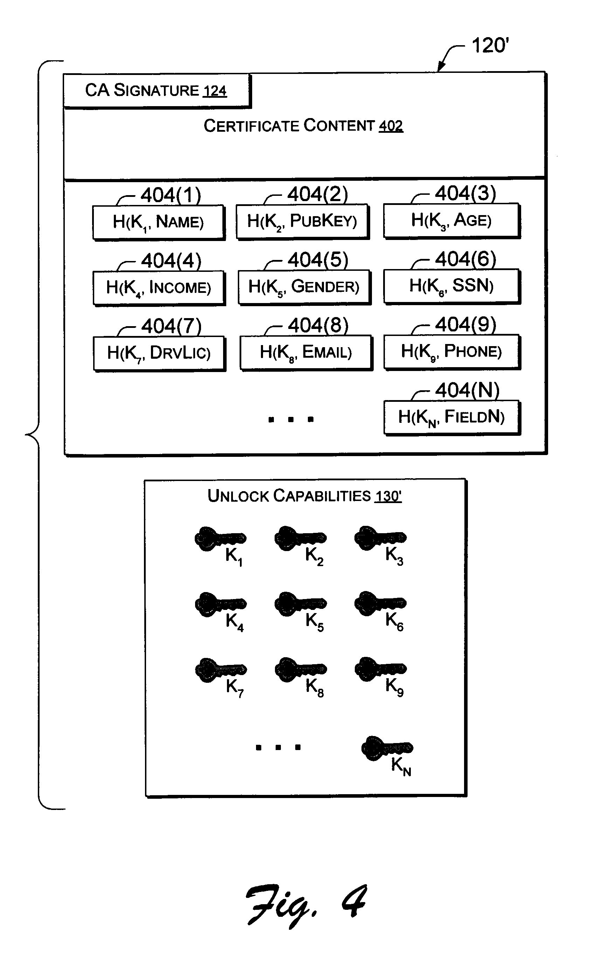

The selectively disclosable digital certificate 120 has multiple fields 122(1), 122(2), 122(3), ..., 122(N) to hold associated items of personal information. The certifying authority 104 populates every field 122(1)-122(N) with an associated data item received from in the request 110 from the user. But, instead of populating each of these fields 122(1)-122(N) with the actual data to be authenticated, each field is populated with an obfuscated version of the data. That is, each data field is separately obfuscated using independent mechanisms to render the personal data item contained in each field unreadable unless the user also provides corresponding unlock capabilities to open the field. The data in the fields may be obfuscated in different ways including, for example, using encryption techniques and/or digital hashing techniques. Two examples are described below with respect to Figs. 3 and 4.

The certifying authority 104 digitally signs the certificate with a digital signature 124, inclusive of the obfuscated data fields 122(1)-122(N), thereby attesting to the authenticity of the contents of the certificate. The certifying authority returns the signed certificate 120 and an unlock capabilities packet 130 containing corresponding unlock capabilities 132(1), 132(2), 132(3), ..., 132(N) for each respective field 122(1), 122(2), 122(3), ..., 122(N). The unlock capabilities may be, for example, the various keys used for encryption or computation of keyed hash values. The user computing device 102 stores the selectively disclosable digital certificate 120 and unlock capabilities 130 in memory for use in subsequent third-party transactions.

In an alternative implementation, the user computing device may supply the unlock capabilities to the certifying authority 104 for use in obfuscating the corresponding fields. For instance, the user computing device may provide the random values used to encrypt or hash the data to be placed in the certificate fields. In this case, the certifying authority 104 does not return the unlock capabilities packet 130 because the user computing device 102 presumably has the capabilities.

Another possible implementation is for the user computing device 102 to submit values that, once at the certifying authority, are replaced by values derived in an agreed upon way from the submitted values, such as by using a shared key. Here, the certifying authority 104 would not need to return an unlock capabilities packet 130 containing the replacement values derived from the user-submitted values since these values could be derived independently by the user computing device 102.

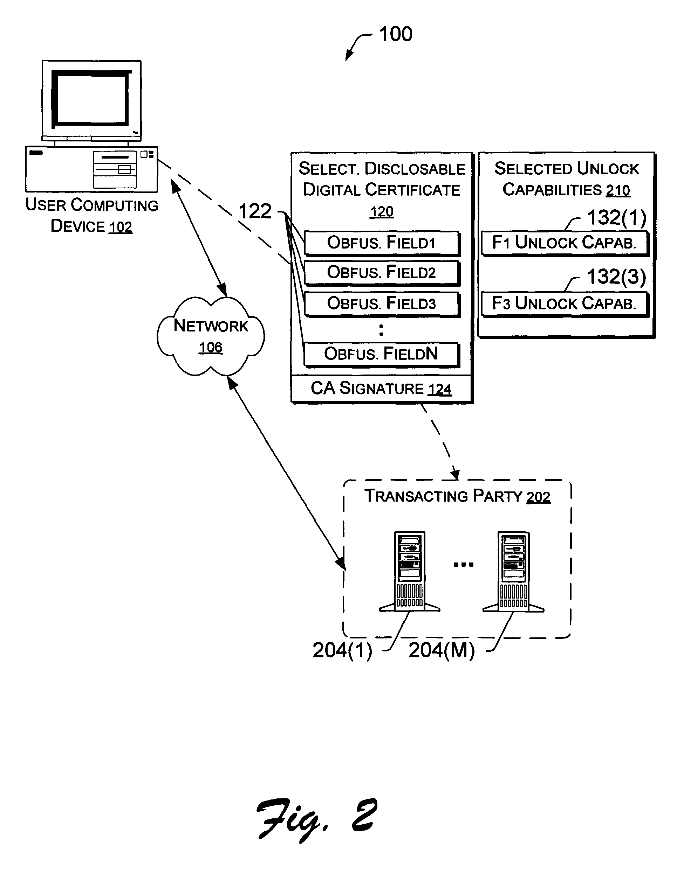

Fig. 2 shows the computer network system 100 during the second transaction phase in which the user computing device 102 submits the selectively disclosable certificate 120 to a transacting party 202 over network 106 as part of an authentication protocol. The transacting party 202 is representative of essentially any type of party with which the user may be interested in communicating and providing the certificate. The transacting party might be a financial institution, a gaming website, a merchant, a news organization, a government agency, a potential recipient of encrypted email, and so on. The transacting party 202 is illustrated as having one or more computers 204(1), ... 204(M) configured to receive certificates 120 from various user computing devices 102 and use the certificates to authenticate the users and/or their devices. The computing device described with respect to Fig. 8 may be used, for example, to implement a server computer 204.

When the user submits the certificate 120, the user also selects which of his/her personal data should be revealed for purposes of this transaction. For instance, the user may decide that the transacting party 202 only needs to see a name, public key, and expiration date. Accordingly, the user computing device 102 identifies the data fields in the certificate that hold the disclosable data items. The user computing device 102 then submits the entire certificate 120 along with a packet 210 of selected unlock capabilities for the data fields identified as containing the disclosable data items. In the illustration of Fig. 2, the packet 210 contains the unlock capabilities 132(1) and 132(3) for data fields 1 and 3. The transacting party 202 first verifies the signature 124 as belonging to the certifying authority. The transacting party 202 then uses the selected unlock capabilities 210 to open the selected data fields in the certificate 120, retrieves the data items from the opened fields, and uses the data items to authenticate the user for the requested transaction.

In a typical setting, a user may obtain multiple certificates at one time from the certifying authority. Multiple uses of a single certificate may, in some situations, create privacy risks by allowing multiple transacting parties to combine their data to create associations. By requesting multiple certificates at once, the user may then, at any subsequent time, take a fresh certificate from the previously issued set, select the fields that are to be disclosed in a given transaction, disclose exactly those fields to the transacting party, and then discard the certificate.

The communication between the user computing device and the transacting part may be over a secure channel, or an open channel. With the secure channel, additional cryptographic ciphers are used to protect the communicated content.

## Selectively Disclosable Certificates

Fig. 3 shows one implementation of a selectively disclosable digital certificate 120 and corresponding unlock capabilities packet 130. The certificate has a content section 302 to hold certificate information describing what is being certified by the certifying authority. Multiple obfuscated fields 304(1), 304(2), 304(3), ... 304(N) are also included in the certificate. Each field contains an associated data item related to the user. In this example, there is a data field 304(1) for the user's name, a data field 304(2) for the user's public key from a public/private key pair, a data field 304(3) for the user's age, a data field 304(4) for the user's income, a data field 304(5) for the user gender, a data field 304(6) for the user's social security number, a data field 304(7) for the user's drivers license, a data field 304(8) for the user's email address, a data field 304(9) for the user's phone number. Other fields might include name of employer, credit report, income and asset information, purchase histories, and club memberships, single-use or ephemeral keys, and so on.

In this implementation, the certifying authority encrypts the data item prior to placing the data item in each field. The certifying authority uses a different encryption key $K_1$-$K_N$ for each respective data item in corresponding field 304(1)-304(N). That is, the name data in field 304(1) is encrypted with a first key $K_1$, the public key data in field 304(2) is encrypted with a second key $K_2$, and so on. Standard encryption algorithms (e.g., RSA, DES, etc.) may be used to encrypt the field contents. Each key can be generated as a random value at the time of certificate creation, so that the keys are random and unique. As a result, the contents of every individual field are obfuscated with a different key and can only be recovered by a party who is given possession of the corresponding key.

The certifying authority digitally signs the selectively disclosable certificate 120, inclusive of the encrypted fields, to attach the signature 124. That is, the signature is computed using the signing function "$S_{CA}$" as follows:

$$\text{Signature} = SC_A \text{ (field1, field2, .... fieldN)}$$

$$\text{where, field 1} = E_{K1}(\text{Name}),$$

$$\text{field2} = E_{K2}(\text{PubKey}),$$

$$...$$

$$\text{fieldN} = E_{KN}(\text{data item N}).$$

The certificate can be made smaller by first computing a hash digest of the concatenated fields prior to signing, as follows:

$$\text{Signature} = S_{CA} \text{ (Hash(field1, field2, .... fieldN))}$$

The unlock capabilities packet 130 contains the randomly generated keys $K_1$-$K_N$. The certifying authority returns both the certificate 120 and corresponding unlock capabilities packet 130 to the user computing device. Then, when the user wishes to submit a certificate for authentication purposes, the user computing device 102 submits the selectively disclosable certificate 120 and selected ones of the keys $K_1$-$K_N$ to control which fields can be opened. The transacting party 202 evaluates the certificate signature 124 and if valid, uses the submitted keys to open the selected data fields. The recovered data is then used in the authentication process. In this manner, the user has strong control over what authenticated data is released to whom without allowing even the certifying authority to determine precisely what data is being disclosed.

Fig. 4 shows another implementation of a selectively disclosable digital certificate 120' and corresponding unlock capabilities packet 130'. The certificate has a content section 402 with contents describing that the certifying authority vouches for the authenticity of the data in the accompanying fields. Multiple obfuscated fields 404(1), 404(2), 404(3), ... 404(N) are included in the certificate. Each field contains an associated data item related to the user, but formatted to hide the data item.

In this implementation, a keyed hash technique is employed to obfuscate the data contained in the fields. The certifying authority populates each field with a cryptographic hash of the data item together with an independently chosen random value. More specifically, the certifying authority concatenates the data item for the field with a random key, and then computes a hashing function of the concatenated result. This produces a hash digest derived as a function of the data and the random value. For example, field 404(1) contains a hash digest H(K1, Name) derived from computing a hashing function H of a randomly generated key $K_1$ and the user's name. Field 404(2) contains a hash digest $H(K_2, \text{PubKey})$ derived from computing a hashing function H of a random key $K_2$ and the user's public key, and so on. Each key can be randomly generated at the time of certificate creation. The keys can be randomly generated using independent random generation processes and/or pseudo-random generation processes.

As a result, the contents of every individual field are obfuscated with separate keys. The certifying authority digital signs the selectively disclosable certificate 120, inclusive of the obfuscated fields 404, to attach the signature 124. The signature is computed using the signing function "$S_{CA}$" as follows:

$$\text{Signature} = S_{CA} \text{ (field1, field2 .... fieldN)}$$

$$\text{where, field1} = H(K_1, \text{Name}),$$

$$\text{field2} = H(K_2, \text{PubKey}),$$

$$...$$

$$\text{fieldN} = H(K_N, \text{data item N}).$$

The unlock capabilities packet 130' contains the randomly generated keys $K_1$-$K_N$. The certifying authority returns both the certificate 120' and corresponding unlock capabilities packet 130' to the user computing device. When the user wishes to submit a certificate for authentication purposes, the user computing device 102 submits the selectively disclosable certificate 120', selected ones of the keys $K_1$-$K_N$ for chosen fields to be disclosed, and the data items that are in those fields.

The transacting party 202 evaluates the certificate signature 124 and if valid, computes a hash digest as a hash function of the submitted keys and data items. If the computed hash digest matches the hash digest in the corresponding obfuscated field of the certificate, the transacting party 202 is assured that the submitted data is authentic. The recovered data is then used in the authentication process. Thus, once again the user has strong control over what authenticated data is released to whom.

The keyed hashed implementation of Fig. 4 allows the certificates 120' to be smaller in comparison to the certificate 120 of Fig. 3, because the hashed digests in fields 404 can be smaller than the encrypted data fields 304. With the keyed hash implementation, however, the user submits the actual data to the transacting party for verification purposes. To protect this data, it is desirable to use this type of selectively disclosable certificate within the context of secured communications between the user computing device and the transacting party.

**Authentication Protocol**

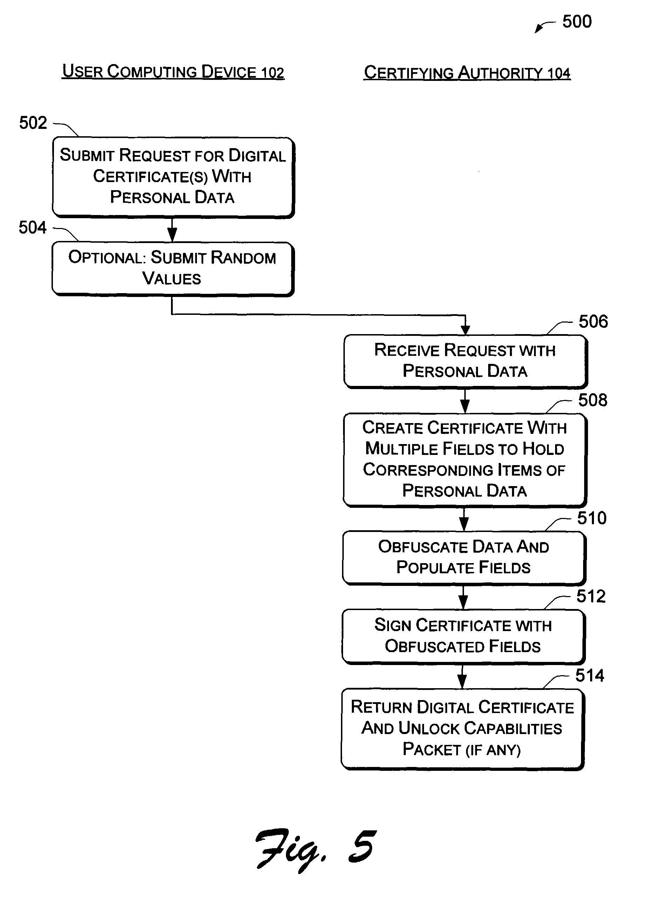

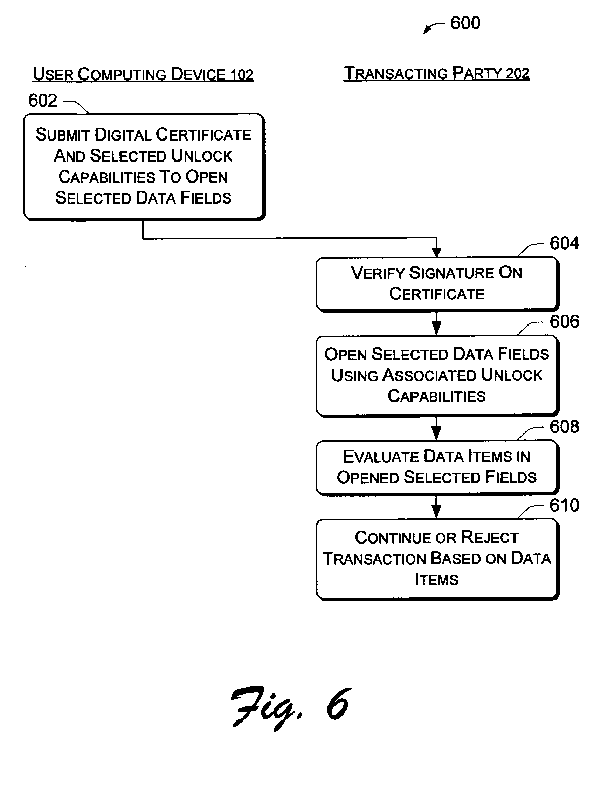

Figs. 5 and 6 illustrate the two phases of the authentication protocol. Fig. 5 shows a first phase process 500 in which the user requests and obtains a digital certificate from the certifying authority. Fig. 6 shows a second phase process 600 in which the user submits the digital certificate to the transacting party for authentication. The processes 500 and 600 will be described with reference to the architecture of Figs. 1 and 2.

The processes 500 and 600 may be implemented in software as computer-executable instructions that direct various computing devices to perform the operations illustrated in blocks. The operations may additionally, or alternatively, be performed in hardware, firmware, or a combination of hardware, firmware, and software. Additionally, for discussion purposes, the operations are aligned beneath headings to represent which entities might perform the operations.

With reference to Fig. 5, the user computing device 102 submits a request 110 for one or more digital certificates (block 502). The request 110 contains personal data that can be used to uniquely identify the user. Such data might include name, public key, age, email address, physical address, telephone number, gender, driver's license, social security number, name of employer, credit report, requestor's income and assets, purchase histories, club memberships, affiliations, and so on. At block 504, the user computing device may optionally submit random values that are used to obfuscate the data as they are placed in the certificate fields.

At block 506, the certifying authority receives the request 110 with the personal data. The certifying authority creates one or more certificates, each with multiple fields to hold corresponding items of the personal data (block 508). The number of fields corresponds to the number of data items to be individually or independently selectable by the user. Alternatively, multiple data items may be stored in individual fields.

At block 510, the certifying authority obfuscates the data destined for the individual fields and populates the fields with the obfuscated data. Obfuscating the data fields may be done in many ways. For instance, the certifying authority may encrypt the data using randomly generated key values, and then place the encrypted data in the fields. This approach results in a certificate 120, as illustrated in Fig. 3. Another approach is to use the random values to compute a cryptographic hash of the data items and then place the hash digest in the certificate fields. This approach results in a certificate 120', as illustrated in Fig. 4. The key values may be generated at the certifying authority, or received from the user computing device, or derived from the user-submitted values.

At block 512, the certifying authority digitally signs the certificates) with the obfuscated fields. The certifying authority then returns the signed certificate(s) and the unlock capabilities packet (if any) to the user computing device (block 514).

With reference to Fig. 6, the user computing device 102 submits a selectively disclosable certificate to a transacting party 202 (block 602). The user computing device 102 also submits selected unlock capabilities that are associated with the certificate fields that the user wishes to reveal to the transacting party. For instance, the user computing device may submit selected keys to help decrypt the contents, or selected keys together with the data items to verify hash digests in the certificate.

At block 604, the transacting party 202 initially verifies the signature on the certificate as belonging to the certifying authority. If the signature is valid, the transacting party 202 uses the selected unlock capabilities to open selected data fields of the certificate (block 606). The transacting party 202 evaluates the data items from the selected opened fields within the authentication procedures (block 608). Based on this evaluation, the transacting party 202 may continue or reject the transaction (block 610).

**Third-Party Authentication Protocol**

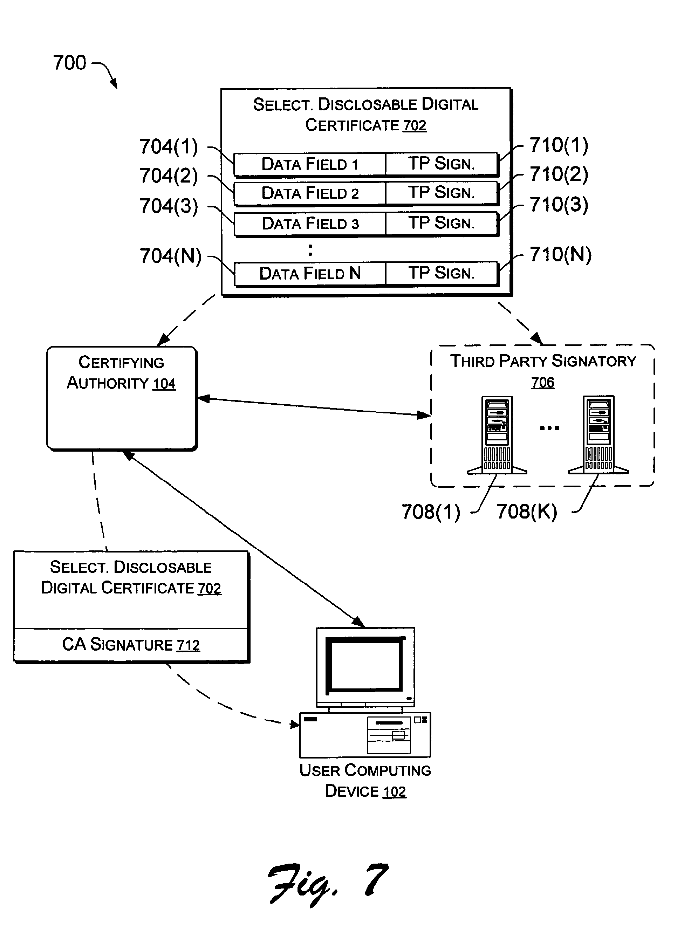

Fig. 7 shows another implementation for generating and issuing a selectively disclosable digital certificate. In this implementation, one or more third party signatories signs individual fields of the digital certificate. More specifically, a user computing device 102 submits a request (not shown) to the certifying authority 104. In response, the certifying authority 104 generates a selectively disclosable digital certificate 702 having multiple fields 704(1), 704(2), 704(3), ..., 704(N) to hold associated items of personal information submitted by the user. The certifying authority 104 populates every field with an associated data item received in the user's request.

The certifying authority 104 submits the certificate to one or more third party signatories, as represented by signatory 706. Representative signatories include government agencies, trusted financial institutions, trusted signing entities, and so on. The third party signatory 706 has one or more server computers 708 (1), ..., 708(K) that receives the certificate and verifies the data in one or more fields 704(1 )-704(N). The third party signatory 706 then digitally signs the fields that it verifies as accurate. As illustrated, every field, or a subset of fields, are independently and individually signed by the third party signatory 706, as represented by third-party signatures 710(1), 710(2), 710(3), ..., 710(N) for associated fields 704(1), 704(2), 704(3), ..., 704(N). The third party signatory 706 returns the certificate 702 to the certifying authority. If the certificate is passed to more than one third party signatory, the certificate will have fields with signatures from multiple different signatories.

With this approach, the contents of every individual field are verified and signed by one or more third party signatories. The certifying authority may then optionally sign the selectively disclosable certificate 702, inclusive of the individually-signed fields 704, to attach the signature 712. The signature is computed using the certifying authority's signing function "$S_{CA}$" as follows:

$$\text{Signature} = S_{CA}(\text{field1, field2, .... fieldN})$$

$$\text{where, field1} = S_{TP}(\text{datal}),$$

$$\text{field2} = S_{TP}(\text{data2}),$$

$$...$$

$$\text{fieldN} = S_{TP}(\text{dataN}),$$

and $S_{TP}$ is the signing function used by the one or more third party signatories.

The signed certificate 702 is returned to the user computing device 102.

In an alternate embodiment, the user computing device 102 may correspond directly with one or more third party signatories 706 to obtain signed data fields that it submits to the certifying authority 104.

## Exemplary Computer

Fig. 8 illustrates an example of a suitable computing environment 800 that may be used to implement the user computing device 102, the certifying authority's server computer 108, the transacting party's computer 204, and/or the third-party signatory's computer 708. Although one specific configuration is shown, the various computing devices may be implemented in other computing configurations.

The computing environment 800 includes a general-purpose computing device in the form of a computer 802. The components of computer 802 can include, by are not limited to, one or more host processors or processing units 804, a system memory 806, and a system bus 808. The system bus 808 represents one or more of any of several types of bus structures, including a memory bus or memory controller, a peripheral bus, an accelerated graphics port, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus.

Computer 802 typically includes a variety of computer readable media. Such media can be any available media that are accessible by the computer and includes both volatile and non-volatile media, removable and non-removable media. The system memory 806 includes computer readable media in the form of volatile memory, such as random access memory (RAM) 810, and/or non-volatile memory, such as read only memory (ROM) 812. A basic input/output system (BIOS) 814, containing the basic routines that help to transfer information between elements within computer 802, such as during start-up, is stored in ROM 812. RAM 810 typically contains data and/or program modules that are immediately accessible to and/or presently operated on by the processing unit 804.

Computer 802 may also include other removable/non-removable, volatile/non-volatile computer storage media. By way of example, Fig. 8 illustrates a hard disk drive 816 for reading from and writing to a non-removable, non-volatile magnetic media (not shown), a magnetic disk drive 818 for reading from and writing to a removable, non-volatile magnetic disk 820 (e.g., a "floppy disk"), and an optical disk drive 822 for reading from and/or writing to a removable, non-volatile optical disk 824 such as a CD-ROM, DVD-ROM, or other optical media. The hard disk drive 816, magnetic disk drive 818, and optical disk drive 822 are each connected to the system bus 808 by one or more data media interfaces 826, or alternatively by one or more interfaces (not shown).

The disk drives and their associated computer-readable media provide non-volatile storage of computer readable instructions, data structures, program modules, and other data for computer 802. By way of example, and not limitation, computer readable media may comprise "computer storage media" (e.g., the volatile and non-volatile, removable and non-removable media described above) and "communications media", which typically embodies computer readable instructions, data structures, program modules, or other data in a modulated data signal, such as carrier wave or other transport mechanism. Communication media also includes any information delivery media. It is to be appreciated that other types of computer readable media can be utilized, such as magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Any number of program modules can be stored on the various memories including, by way of example, an operating system 827, one or more application programs 828, other program modules 830, and program data 832. For purposes of illustration, application programs and other executable program components such as the operating system are illustrated as discrete blocks stored in memory, although it is recognized that such programs and components reside at various times in different storage components of the computing device 802, and are executed by the data processor(s) of the computer.

A user can enter commands and information into computer 802 via input devices such as a keyboard 834 and a pointing device 836 (e.g., a "mouse"). Other input devices 838 (not shown specifically) may include a microphone, joystick, game pad, satellite dish, serial port, scanner, and/or the like. These and other input devices are connected to the processing unit 804 via input/output interfaces 840 that are coupled to the system bus 808, but may be connected by other interface and bus structures, such as a parallel port, game port, or a universal serial bus (USB).

A monitor 842 or other type of display device can also be connected to the system bus 808 via an interface, such as a video adapter 844. In addition to the monitor 842, other output peripheral devices can include components such as speakers (not shown) and a printer 846 which can be connected to computer 802 via the input/output interfaces 840.

Computer 802 can operate in a networked environment using logical connections to one or more remote computers, such as a remote computing device 848. By way of example, the remote computing device 848 can be a personal computer, portable computer, a server, a router, a network computer, a peer device or other common network node, and the like. The remote computing device 848 is illustrated as a portable computer that can include many or all of the elements and features described herein relative to computer 802.

Logical connections between computer 802 and the remote computer 848 are depicted as a local area network (LAN) 850 and a general wide area network (WAN) 852. Such networking environments are commonplace in offices, enterprise-wide computer networks, intranets, and the Internet.

When implemented in a LAN networking environment, the computer 802 is connected to a local network 850 via a network interface or adapter 854. When implemented in a WAN networking environment, the computer 802 typically includes a modem 856 or other means for establishing communications over the wide network 852. The modem 856, which can be internal or external to computer 802, can be connected to the system bus 808 via the input/output interfaces 840 or other appropriate mechanisms. It is to be appreciated that the illustrated network connections are exemplary and that other means of establishing communication link(s) between the computers 802 and 848 can be employed.

In a networked environment, such as that illustrated with computing environment 800, program modules depicted relative to the computer 802, or portions thereof, may be stored in a remote memory storage device. By way of example, remote application programs 858 reside on a memory device of remote computer 848. For purposes of illustration, application programs and other executable program components such as the operating system are illustrated herein as discrete blocks, although it is recognized that such programs and components reside at various times in different storage components of the computing device 802, and are executed by the data processor(s) of the computer.

## Conclusion

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A method comprising:

   receiving a request for a digital certificate, the request containing multiple data items;
   creating a digital certificate having multiple fields for corresponding data items;
   obfuscating at least some of the data items;
   storing the obfuscated data items in the corresponding fields; and
   issuing the digital certificate.

2. A method as recited in claim 1, wherein the data items comprise personal information pertaining to a person who submits the request.

3. A method as recited in claim 1, wherein each field holds one data item.

4. A method as recited in claim 1, wherein the obfuscating comprises encrypting the data items.

5. A method as recited in claim 1, wherein the obfuscating comprises computing hash digests from the data items.

6. A method as recited in claim 1, wherein the obfuscating comprises facilitating a third party signature of individual data items.

7. A method as recited in claim 1, wherein the obfuscating comprises:

generating random values for associated fields; and

processing the data items to be held in the corresponding fields as a function of the random values associated with the fields.

8. A method as recited in claim 7, wherein the generating random values comprises generating random values using a pseudo-random process.

9. A method as recited in claim 1, further comprising digitally signing the digital certificate.

10. A digital certificate data structure stored on a computer-readable medium constructed as a result of the method as recited in claim 1.

11. One or more computer-readable media having computer executable instructions for performing the steps in the method as recited in claim 1.

12. A method comprising:

creating a digital certificate having multiple fields;
generating separate key values for associated fields;
obfuscating data to be stored in the fields as a function of the separate key values associated with the fields; and
storing the obfuscated data in the corresponding fields.

13. A method as recited in claim 12, wherein:

the obfuscating comprises encrypting the data destined for the fields using the key values associated with the fields; and
the storing comprises storing the encrypted data in the corresponding fields.

14. A method as recited in claim 12, wherein:

the obfuscating comprises computing hash digests from the data and the key values; and
the storing comprises storing the hash digests in the corresponding fields.

15. A method as recited in claim 12, further comprising digitally signing the digital certificate.

16. A method as recited in claim 12, further comprising storing the key values in a packet separate from the certificate.

17. A method as recited in claim 16, further comprising issuing the digital certificate along with the packet to a requestor.

18. A digital certificate data structure stored on a computer-readable medium constructed as a result of the method as recited in claim 12.

19. One or more computer-readable media having computer executable instructions for performing the steps in the method as recited in claim 12.

20. A method for authenticating a party, comprising:

receiving a digital certificate having multiple fields, at least some of the fields containing associated data items stored in an obfuscated form;
receiving capabilities to permit exposure of data items in selected fields;
exposing the data items in the selected fields using the capabilities while leaving other data items in the obfuscated form; and
authenticating the party based on the exposed data items.

21. A method as recited in claim 20, wherein:

the data items are encrypted using associated keys, where there is one key for each field; and
the capabilities comprise the keys for the selected fields.

22. A method as recited in claim 21, wherein the exposing comprises decrypting the data items in the selected fields using the keys for the selected fields.

23. A method as recited in claim 20, wherein:

the data items are keyed hash values derived from data and associated keys, where there is one key for each field; and
the capabilities comprise the data items and the associated keys for the selected fields.

24. A method as recited in claim 23, wherein the exposing comprises:

computing keyed hash values from the data items and the associated keys in the selected fields; and
comparing the computed keyed hash values with the keyed hash values stored in the certificate.

25. One or more computer-readable media having computer executable instructions for performing the steps in the method as recited in claim 20.

26. A method, comprising:

sending a request for a digital certificate, the request containing multiple data items;
receiving a digital certificate having multiple fields, at least some of the fields containing associated data items stored in an obfuscated form;
receiving a packet with capabilities to permit exposure of the data items in the fields;
selecting a subset of data items to expose during authentication; and
submitting the digital certificate together with the capabilities that enable exposure of the selected subset of data items stored in corresponding fields without exposing other non-selected data items in other fields of the certificate.

27. A method as recited in claim 26, wherein the data items comprise personal information pertaining to a user who is requesting the digital certificate.

28. A method as recited in claim 26, wherein:

the data items are encrypted using associated keys corresponding to the fields of the certificate; and
the packet contains the keys.

29. A method as recited in claim 28, wherein the submitting comprises sending the digital certificate together with selected keys to enable decryption of the selected subset of data items.

30. A method as recited in claim 26, wherein:

the data items comprise keyed hash values derived from submitted data and associated keys corresponding to the fields of the certificate; and
the packet comprises the keys.

31. A method as recited in claim 30, wherein the submitting comprises sending the digital certificate together with the selected subset of data items and selected keys to enable computation of keyed hash values for verification with the keyed hash values stored in the certificate.

32. One or more computer-readable media having computer executable instructions for performing the steps in the method as recited in claim 26.

33. A method comprising:

receiving a request for a digital certificate, the request containing multiple data items;
creating a digital certificate having multiple fields for corresponding data items;
populating the fields with the data items;

obtaining, from one or more third-party signatories, signatures of data items in individual fields; and
issuing the digital certificate.

34. A method as recited in claim 33, further comprising digitally signing the digital certificate.

35. One or more computer-readable media having computer executable instructions for performing the steps in the method as recited in claim 33.

36. One or more computer-readable media having computer-executable instructions that, when executed, direct a computing device to:

construct a certificate data structure having multiple fields for different data items;
generate keys for associated fields;
encrypt the data items destined for storage in the fields using the keys associated with the fields such that a data item destined for a particular field is encrypted using a key associated with the particular field; and
store the encrypted data items in the fields.

37. One or more computer-readable media as cited in claim 36, further comprising computer-executable instructions that, when executed, direct a computing device to store the keys in a packet separate from the certificate.

38. One or more computer-readable media as cited in claim 36, further comprising computer-executable instructions that, when executed, direct a computing device to store one encrypted data item in each field.

39. One or more computer-readable media as cited in claim 36, further comprising computer-executable instructions that, when executed, direct a computing device to digitally sign the certificate inclusive of the encrypted data items in the fields.

40. A computing system comprising the one or more computer-readable media as recited in claim 36.

41. One or more computer-readable media having computer-executable instructions that, when executed, direct a computing device to:

construct a certificate data structure having multiple fields for different data items;
generate keys for associated fields;
compute keyed hash digests from the data items and the keys associated with the fields such that a keyed hash digest for a particular field is derived from the data item destined for the particular field and the key associated with the particular field; and
store the keyed hash digests in the fields.

42. One or more computer-readable media as cited in claim 41, further comprising computer-executable instructions that, when executed, direct a computing device to store the keys in a packet separate from the certificate.

43. One or more computer-readable media as cited in claim 41, further comprising computer-executable instructions that, when executed, direct a computing device to store one keyed hash digest in each field.

44. One or more computer-readable media as cited in claim 41, further comprising computer-executable instructions that, when executed, direct a computing device to digitally sign the certificate inclusive of the keyed hash values in the fields.

45. A computing system comprising the one or more computer-readable media as recited in claim 41.

46. One or more computer-readable media having computer-executable instructions that, when executed, direct a computing device to:

receive a digital certificate having multiple fields, at least some of the fields containing associated data items stored in an obfuscated form;
receive capabilities to permit exposure of data items in selected fields;
expose the data items in the selected fields using the capabilities without exposing other data items in non-selected fields; and
use the exposed data items for authentication.

47. One or more computer-readable media as cited in claim 46, wherein the data items are encrypted with corresponding keys and the capabilities comprise selected keys to enable decryption of the data items in the selected fields.

48. One or more computer-readable media as cited in claim 46, wherein the data items comprise keyed hash values derived from user information and associated keys and the capabilities comprise selected keys and the user information to enable computation of keyed hash values for comparison with the keyed hash values stored in the selected fields.

49. A computing system comprising the one or more computer-readable media as recited in claim 46.

50. One or more computer-readable media having computer-executable instructions that, when executed, direct a computing device to:

store a digital certificate having multiple fields, at least some of the fields containing associated data items stored in an obfuscated form;
store capabilities to permit exposure of individual data items in the fields;
select a subset of data items to expose during authentication; and
submit the digital certificate together with the capabilities that enable exposure of the selected subset of data items stored in corresponding fields without exposing other non-selected data items in other fields of the certificate.

51. One or more computer-readable media as cited in claim 50, wherein the data items are encrypted with corresponding keys and the capabilities comprise selected keys to enable decryption of the data items in the selected fields.

52. One or more computer-readable media as cited in claim 50, wherein the data items comprise keyed hash values derived from user information and associated keys and the capabilities comprise selected keys and the user information to enable computation of keyed hash values for comparison with the keyed hash values stored in the fields.

53. A computing system comprising the one or more computer-readable media as recited in claim 50.

54. A certifying authority system comprising one or more server computers configured to receive a request containing multiple data items and create a digital certificate having multiple fields to store associated data items in obfuscated form such that data items in different fields are obfuscated in a manner that permits selective exposure of data items in individual fields without exposure of data items in other fields.

55. A certifying authority system as recited in claim 54, wherein the data items comprise personal information pertaining to a person who submits the request.

56. A certifying authority system as recited in claim 54, wherein each field holds one data item.

57. A certifying authority system as recited in claim 54, wherein the one or more servers are configured to generate keys for corresponding fields of the digital certificate and to encrypt the data items in the different fields using the corresponding keys.

58. A certifying authority system as recited in claim 54, wherein the one or more servers are configured to generate keys for corresponding fields of the digital certificate and to compute keyed hash digests from the data items and the keys.

59. A certifying authority system as recited in claim 54, wherein the one or more servers are configured to digitally sign the digital certificate, inclusive of the obfuscated data items in the multiple fields.

60. A certifying authority system comprising one or more server computers configured to receive a request containing multiple data items and create a digital certificate having multiple fields to store associated data items, the one or more server computers being further configured to obtain, from one or more third-party signatories, signatures of the data items in individual fields.

61. A computing device comprising:

memory to store a digital certificate having multiple fields that hold associated data items in obfuscated form, the data items in different fields being obfuscated in a manner that permits selective exposure of one or more data items in one or more selected fields without exposure of one or more data items in one or more other fields; and
a processor to select one or more fields of the digital certificate to expose during an authentication protocol and to submit the digital certificate along with capabilities to expose one or more data items in the selected one or more fields.

62. A computing device as recited in claim 61, wherein each field holds one data item.

63. A computing device as recited in claim 61, wherein the data items for different fields are encrypted using separate keys.

64. A computing device as recited in claim 61, wherein the data items for different fields are used to derive hash digests and the hash digests are stored in the fields.

65. A digital certificate stored on a computer-readable medium, comprising:

multiple fields;
multiple data items stored in associated fields; and

wherein the data items are obfuscated prior to storage in the fields in a manner that permits selective exposure of one or more first data items in one or more first fields without exposure of one or more second data items in one or more second fields.

66. A digital certificate as recited in claim 65, wherein the data items are encrypted prior to storage in the fields, the data items in the different fields being encrypted with separate keys.

67. A digital certificate as recited in claim 65, wherein the data items are used to derive hash digests and the hash digests are stored in the fields.

68. A digital certificate as recited in claim 65, further comprising a digital signature.

*Fig. 1*

*Fig. 2*

*Fig. 3*

**120'**

**CA SIGNATURE 124**

**CERTIFICATE CONTENT 402**

**404(1)**
$H(K_1, \text{NAME})$

**404(2)**
$H(K_2, \text{PUBKEY})$

**404(3)**
$H(K_3, \text{AGE})$

**404(4)**
$H(K_4, \text{INCOME})$

**404(5)**
$H(K_5, \text{GENDER})$

**404(6)**
$H(K_6, \text{SSN})$

**404(7)**
$H(K_7, \text{DRVLIC})$

**404(8)**
$H(K_8, \text{EMAIL})$

**404(9)**
$H(K_9, \text{PHONE})$

**404(N)**
$H(K_N, \text{FIELDN})$

. . .

**UNLOCK CAPABILITIES 130'**

$K_1$   $K_2$   $K_3$

$K_4$   $K_5$   $K_6$

$K_7$   $K_8$   $K_9$

. . .   $K_N$

*Fig. 4*

500

USER COMPUTING DEVICE 102          CERTIFYING AUTHORITY 104

502

SUBMIT REQUEST FOR DIGITAL
CERTIFICATE(S) WITH
PERSONAL DATA

504

OPTIONAL: SUBMIT RANDOM
VALUES

506

RECEIVE REQUEST WITH
PERSONAL DATA

508

CREATE CERTIFICATE WITH
MULTIPLE FIELDS TO HOLD
CORRESPONDING ITEMS OF
PERSONAL DATA

510

OBFUSCATE DATA AND
POPULATE FIELDS

512

SIGN CERTIFICATE WITH
OBFUSCATED FIELDS

514

RETURN DIGITAL CERTIFICATE
AND UNLOCK CAPABILITIES
PACKET (IF ANY)

*Fig. 5*

— 600

USER COMPUTING DEVICE 102          TRANSACTING PARTY 202

602

SUBMIT DIGITAL CERTIFICATE
AND SELECTED UNLOCK
CAPABILITIES TO OPEN
SELECTED DATA FIELDS

604

VERIFY SIGNATURE ON
CERTIFICATE

606

OPEN SELECTED DATA FIELDS
USING ASSOCIATED UNLOCK
CAPABILITIES

608

EVALUATE DATA ITEMS IN
OPENED SELECTED FIELDS

610

CONTINUE OR REJECT
TRANSACTION BASED ON DATA
ITEMS

*Fig. 6*

700

SELECT. DISCLOSABLE DIGITAL CERTIFICATE 702

| 704(1) | DATA FIELD 1 | TP SIGN. | 710(1) |
| 704(2) | DATA FIELD 2 | TP SIGN. | 710(2) |
| 704(3) | DATA FIELD 3 | TP SIGN. | 710(3) |
| 704(N) | DATA FIELD N | TP SIGN. | 710(N) |

CERTIFYING AUTHORITY 104

THIRD PARTY SIGNATORY 706

708(1)   708(K)

SELECT. DISCLOSABLE DIGITAL CERTIFICATE 702

CA SIGNATURE 712

USER COMPUTING DEVICE 102

*Fig. 7*

*Fig. 8*